# EUROPEAN PATENT APPLICATION

(11) **EP 4 668 237 A1**
(43) Date of publication of application: **24.12.2025**
(21) Application number: 24757085.6
(22) Date of filing: 01.02.2024
(51) Int. Cl.: G06V 30/19, G06V 30/18, G06V 30/14, G06V 30/146, G06N 3/0455

(54) **METHOD AND DEVICE FOR DETECTING TEXT IN IMAGE**

(30) Priority: 14.02.2023 KR 20230019344
(71) Applicant: Naver Corporation, Seongnam-si, Gyeonggi-do 13561 (KR)
(72) Inventor: KIL, Taeho, Seongnam-si Gyeonggi-do 13529 (KR); KIM, Seonghyeon, Seongnam-si Gyeonggi-do 13529 (KR); SEO, Suk Min, Seongnam-si Gyeonggi-do 13529 (KR); KIM, Yoonsik, Seongnam-si Gyeonggi-do 13529 (KR); KIM, Daehee, Seongnam-si Gyeonggi-do 13529 (KR)
(74) Representative: HGF
(86) International application number: PCT/KR2024/001548
(87) International publication number: WO 2024/172355

(57) **Abstract**

The present disclosure relates to a method for detecting text in an image. The method for detecting text in an image comprises the steps of: receiving an image including text; receiving a command including a text detection condition; and inputting the image and the command into a text detection model so as to generate a sequence indicating a detection result of a text instance included in the image according to the text detection condition.

## Description

### TECHNICAL FIELD

The present disclosure relates to a method and device for detecting text in an image, and more particularly, to a method and device for detecting text in an image based on an instruction including a text detection condition.

### RELATED ART

In general, recent optical character recognition (OCR) refers to technology for detecting or recognizing a corresponding character from an image that includes characters written by a person or printed by a printer. OCR technology is used to detect a character from an image acquired by scanning or capturing a document that includes characters, and is also used to recognize or translate characters printed on an object or a sign in real time from a captured image.

However, in the case of a conventional OCR method, there is a limit that a character itself in an image may be recognized or may be detected in a predetermined format. Also, there is a problem in executing OCR that an appropriate detection format may not be selected depending on requirements of a user or difference in performance of a character detection method for an image, which is a text detection target.

### DETAILED DESCRIPTION

### TECHNICAL SUBJECT

To solve the aforementioned problems, the present disclosure provides a method, a non-transitory computer-readable recording medium storing instruction, and a device (system) for detecting text in an image.

### TECHNICAL SOLUTION

The present disclosure may be implemented in various ways that include a method, a system (device), or a computer program stored in a computer-readable storage medium.

According to an example embodiment of the present disclosure, a method of detecting text in an image may include receiving an image that includes text; receiving an instruction that includes a text detection condition; and generating a sequence indicating a detection result of a text instance included in the image according to the text detection condition by inputting the image and the instruction to a text detection model.

Provided is a non-transitory computer-readable recording medium storing instructions to execute a method of detecting text in an image according to an example embodiment of the present disclosure on a computer.

An information processing system according to an example embodiment of the present disclosure includes a communication module, a memory, and at least one processor configured to connect to the memory, and to execute at least one computer-readable program included in the memory. The communication module is configured to receive an image that includes text, and to receive an instruction that includes a text detection condition, and the at least one program includes instructions for generating a sequence indicating a detection result of a text instance included in the image according to the text detection condition by inputting the image and the instruction to a text detection model.

### EFFECT

According to some example embodiments of the present disclosure, by detecting text in an image according to various types of text detection conditions, it is possible to visualize or output text detected from an image according to a detection location, area, or shape preferred by a user.

According to some example embodiments of the present disclosure, by detecting text in an image according to a detection condition selected from among a plurality of different text detection conditions, it is possible to efficiently detect or recognize text suitable for the selected detection condition.

According to some example embodiments of the present disclosure, it is possible to address an issue that an output information amount of text detection results is limited by a text detection model in an existing sequence generation-based image. Therefore, regardless of the size of an image input to the text detection model or the length of text included in the image, text may be detected at a location or from an area desired by a user within the image.

The effects of the present disclosure are not limited the effects described above and other effects not described may be clearly understood by one of ordinary skill in the art to which the present disclosure pertains (hereinafter, "one of ordinary skill in the art") from the descriptions of the claims.

### BRIEF DESCRIPTION OF DRAWINGS

Example embodiments of the present disclosure will be described with reference to the accompanying drawings described below in which like reference numerals refer to like components, but are not limited thereto.
FIG. 1 illustrates an example of a detection procedure and result of a text instance according to an example embodiment of the present disclosure.
FIG. 2 is a schematic diagram illustrating a configuration in which an information processing system is connected to be capable of communicating with a plurality of user terminals to provide an in-image text detection service according to an example embodiment of the present disclosure.
FIG. 3 is a block diagram illustrating an internal configuration of a user terminal and an information processing system according to an example embodiment of the present disclosure.
FIG. 4 is a block diagram illustrating an internal configuration of a text detection model and input/output data according to an example embodiment of the present disclosure.
FIG. 5 illustrates an example of a sequence generated from a text detection model according to an example embodiment of the present disclosure.
FIG. 6 illustrates an image in which the detection result of a text instance is visualized based on a sequence generated according to an example embodiment of the present disclosure.
FIG. 7 illustrates a process of sequentially detecting a plurality of text instances according to an example embodiment of the present disclosure.
FIG. 8 illustrates the text detection result according to an example embodiment of the present disclosure and the text detection result according to the existing technology.
FIG. 9 is a flowchart illustrating a method of detecting text in an image according to an example embodiment of the present disclosure.

### BEST MODE

Hereinafter, the detailed contents for implement the present disclosure will be described in detail with reference to the accompanying drawings. However, in the following description, when there is a concern of unnecessarily obscuring the gist of the present disclosure, detailed description related to a widely known function or configuration will be omitted.

In the accompanying drawings, like reference numerals are assigned to like or corresponding components. Also, in describing the following example embodiments, redundant description related to like or corresponding components may be omitted. However, although the description of a component is omitted, it is not intended that the component is not included in any example embodiment.

The advantages and the features of the disclosed example embodiments and methods to achieve them will be apparent with reference to example embodiments as described below in detail in conjunction with the accompanying drawings. However, the present disclosure is not limited to the example embodiments set forth below, but may be implemented in various different forms. The following example embodiments are provided only to completely disclose and inform those skilled in the art of the scope of the present invention.

Terms used herein are briefly explained and the disclosed example embodiments are described in detail. The terms used herein have been selected from common terms that are currently widely used as much as possible while considering functions in the present disclosure, but this may vary depending on the intent of engineers engaged in the relevant field, precedents, and emergence of new technology, and the like. Also, in specific cases, there are terms that the applicant has arbitrarily selected, and in this case, the meaning thereof is described in detail in the corresponding description of the invention. Therefore, the terms used herein should be defined based on the meaning of the terms and the overall contents of the present disclosure, rather than simply names of the terms.

As used herein, the singular forms are intended to include the plural forms as well, unless the context clearly indicates otherwise. Also, the plural forms include the singular forms, unless the context indicates otherwise. When a predetermined part is described to include a predetermined component throughout the present specification, it does not indicate that another component is excluded, but indicates that the other component may be further included, unless the context clearly states otherwise.

Also, the term 'module' or 'unit' used herein represents a software or hardware component and 'module' or 'unit' performs certain roles. However, the term 'module' or 'unit is not limited to software or hardware. The term 'module' or 'unit' may be configured to be present in an addressable storage medium, and may be configured to reproduce one or more processors. Therefore, for example, 'module' or 'unit' may include at least one of components such as software components, object-oriented software components, class components, and task components, processes, functions, attributes, procedures, subroutines, segments of a program code, drivers, firmware, microcode, circuitry, data, databases, data structures, tables, arrays, and variables. Functions provided from components and 'modules' or 'units' may be combined into a smaller number of components and 'modules' or 'units' or may be further separated into additional components and 'modules' or 'units.'

According to an example embodiment of the present disclosure, 'module' or 'unit may be implemented as a processor and a memory. The term 'processor' should be broadly interpreted to include a general-purpose processor, a central processing unit (CPU), a microprocessor, a digital signal processor (DSP), a controller, a microcontroller, and a state machine. In some environments, the term 'processor' may refer to an application-specific integrated circuit (ASIC), a programmable logic device (PLD), a field-programmable gate array (FPGA), and the like. Also, 'processor' may refer to a combination of processing devices, such as a combination of a DSP and a microprocessor, a combination of a plurality of microprocessors, a combination of one or more microprocessors combined with a DSP core, or a combination of any other such components. Also, the term 'memory' should be broadly interpreted to include any electronic component capable of storing electronic information. The term 'memory' may refer to various types of processor-readable media, such as random access memory (RAM), read-only memory (ROM), nonvolatile random access memory (NVRAM), programmable read-only memory (PROM), erasable programmable read-only memory (EPROM), electrically erasable PROM (EEPROM), flash memory, a magnetic or optical data storage device, registers, and the like. If the processor may read information from the memory and/or write the information to the memory, the memory is said to be in an electronic communication state with the processor. The memory integrated into the processor is in an electronic communication state with the processor.

In the present disclosure, the term 'text instance' may refer to a single text piece that includes a character, a number, a symbol, and the like, which is a target to be detected or recognized by a text recognition model. For example, when the text recognition model is trained to recognize a street address from an image, each street address used or detected as training data or each of words that constitute the street address may correspond to a text instance.

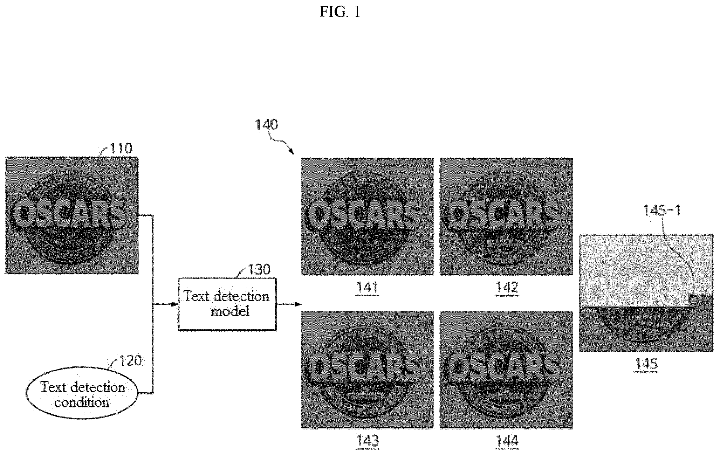

FIG. 1 illustrates an example of a detection procedure and result of a text instance according to an example embodiment of the present disclosure. As illustrated in FIG. 1, in response to an image 110 including text and a text detection condition 120 being input to a text detection model 130, the detection result 140 of a text instance included in the image according to the text detection condition may be generated. For example, the image 110 may include various types of text, such as a number, a symbol, and a character in any language. Also, the image 110 and the text detection condition 120 may be received from a user.

In an example embodiment, the text detection condition 120 may be input to the text detection model 130 in an instruction format. For example, the text detection condition 120 may be input in a sequence format in which at least one token is aligned in certain order. Unlike this, the text detection condition 120 may be input in the form of natural language. In this case, a natural language processing model that converts natural language to a sequence may be additionally used, or a natural language conversion function may be additionally included in the text detection model 130, such that a natural language sentence representing the text detection condition 120 may be converted to the sequence.

The text detection condition 120 may include information associated with a detection type of the text instance. In an example embodiment, the detection type may include at least one of a center point of the text instance, a bounding box of the text instance, and a polygon including the text instance. Here, the detection type may be displayed in the form of the predetermined number of coordinates for the detection type. For example, detection types of a center point, a bounding box, a rectangle, and a polygon excluding the rectangle may be displayed in the form of at least one set of coordinates, such as one set of coordinates representing the center point, two sets of coordinates representing an upper left vertex and a lower right vertex of the bounding box, coordinates of four vertices of the rectangle, and coordinates of all vertices of the polygon, respectively.

For example, when the text detection condition is input such that text in the image 110 is detected based on the center point of the text instance, a location of each text instance within the image 110 may be specified by coordinates (e.g., x, y = 100, 100) of the center point of each corresponding text instance.

As another example, when text in the image 110 is detected based on the bounding box of the text instance, a location of each text instance may be specified by coordinates of an upper left vertex and coordinates of a lower right vertex (e.g., x, y = 10, 10; x, y = 30, 40) of the rectangle that surrounds each corresponding text instance.

The text detection condition may include at least one of a detection start location and a detection area of the text instance within the image. In an example embodiment, the text instance may be detected in a predetermined direction (e.g., left-to-right and top-to-bottom directions) from a preset in-image detection start location. Here, when the detection start location is not set, an upper leftmost point of the image may be designated as the detection start location of the text instance. In another example embodiment, a text instance present within a preset in-image detection area may be detected. The detection area may be specified by various types of figures and locations thereof.

Additionally, the text detection condition may include different types of conditions. For example, the text detection condition may include a detection language (e.g., detecting only a text instance composed of a set detection language, outputting the result of translating the text instance to another set language, outputting the result of translating only the text instance composed of a set language to another set language, etc.), a type of the text instance (e.g., detecting only a specific symbol or number, or detecting only a character in text), start text of the text instance (e.g., detecting a text instance starting with 'A'), context of text (e.g., detecting title text, or detecting address or destination text), detection order in the image (e.g., detecting 13^{th} to 20^{th} instances among text instances included in the image), and a specific emotional state (e.g., detecting a text instance that expresses a sad emotion), but is not limited thereto.

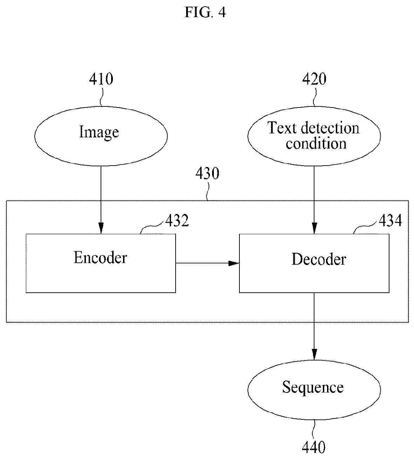

The text detection model 130 may include a transformer artificial neural network model that includes an encoder and a decoder. In this case, if the image 110 is input to the encoder of the text detection model 130 and an image feature extracted by the encoder and the text detection condition 120 are input to the decoder, a text instance included in the image 110 may be detected by the text detection model 130. In an example embodiment, in a learning stage of the text detection model 130, the detection start location may be set to an upper leftmost point of the image with a probability of 0.5 and may be set to an arbitrary point within the image with a remaining probability, such that the text detection model 130 may be trained to detect a text instance from a random detection start location. The specific configuration of the text detection model 130 and input/output data of each configuration are further described with reference to FIG. 4.

The detection result 140 may be generated in response to the image 110 and the text detection condition 120 being input to the text detection model 130. For example, in the first detection result 141, a location of a center point of each text instance included in the image 110 may be displayed on the image. Also, in the second detection result 142 and the fifth detection result 145, a bounding box of each text instance included in the image 110 may be displayed on the image. Also, in each of the third detection result 143 and the fourth detection result 144, a rectangle and a polygon including each text instance included in the image 110 may be displayed on the image. Meanwhile, in the fifth detection result 145, as a detection start location 145_1 of a text instance is specified, it may be verified that the text instance detection result is displayed on the image from left-to-right and top-to-bottom directions from the detection start location 145_1.

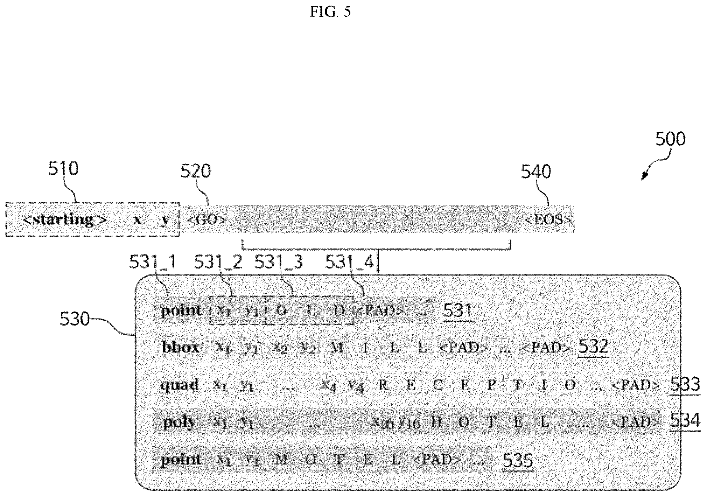

The detection result 140 may be specified or visualized in response to generation of a sequence representing the detection result of text instances included in the image 110 according to the text detection condition 120. The configuration of the sequence is further described with reference to FIG. 5.

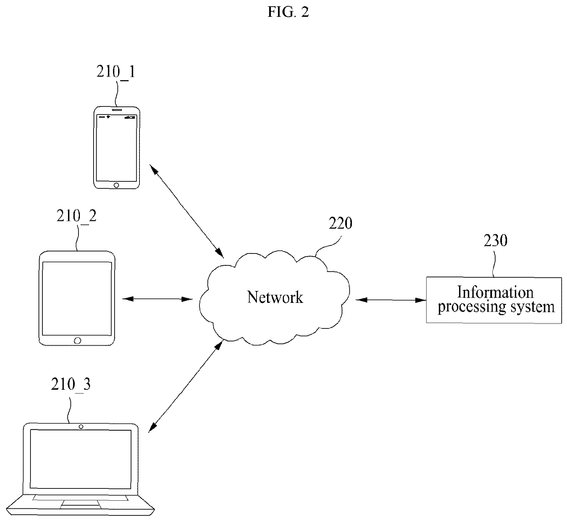

FIG. 2 is a schematic diagram illustrating a configuration in which an information processing system 230 is connected to be capable of communicating with a plurality of user terminals 210_1, 210_2, and 210_3 to provide an in-image text detection service according to an example embodiment of the present disclosure. The information processing system 230 may include a system(s) that may provide an in-image text detection service. In an example embodiment, the information processing system 230 may include at least one server device and/or database, or a cloud computing service-based at least one distributed computing device and/or distributed database that may store, provide, and execute a computer-executable program (e.g., downloadable application) and data associated with the in-image text detection service. For example, the information processing system 230 may include separate systems (e.g., servers) for the in-image text detection service.

The in-image text detection service and the like provided by the information processing system 230 may be provided to the user through a text detection application installed on each of the plurality of user terminals 210_1, 210_2, and 210_3.

The plurality of user terminals 210_1, 210_2, and 210_3 may communicate with the information processing system 230 over a network 220. The network 220 may be configured to enable communication between the plurality of user terminals 210_1, 210_2, and 210_3 and the information processing system 230. The network 220 may be configured according to an installation environment, for example, Ethernet, a wired home network (power line communication), a wired network such as a telephone line communication device and RS-serial communication, a wireless network such as a wireless local area network (WLAN), Wi-Fi, Bluetooth, and ZigBee, or combinations thereof. A communication scheme is not limited, and may include not only a communication scheme utilizing a communication network (e.g., mobile communication network, wired Internet, wireless Internet, broadcasting network, and satellite network) includable in the network 220, but also near-field wireless communication between the user terminals 210_1, 210_2, and 210_3.

For example, the plurality of user terminals 210_1, 210_2, and 210_3 may transmit, to the information processing system 230 over the network 220, an instruction that includes an image containing text and a text detection condition, and the information processing system 230 may receive the same.

In FIG. 2, the portable phone terminal 210_1, the tablet terminal 210_2, and the personal computer (PC) terminal 210_3 are illustrated as examples of the user terminal, but are not limited thereto and the user terminal 210_1, 210_2, 210_3 may be any computing device capable of performing wired and/or wireless communication on which an in-image text detection application may be installed and run. For example, the user terminal may include a smartphone, a portable phone, a navigation device, a computer, a laptop computer, a digital broadcasting terminal, a personal digital assistant (PDA), a portable multimedia player (PMP), a tablet PC, a game console, a wearable device, an Internet of things (IoT) device, a virtual reality (VR) device, and an augmented reality (AR) device. Also, although FIG. 2 illustrates that three user terminals 210_1, 210_2, and 210_3 communicate with the information processing system 230 over the network 220, without being limited thereto, a different number of user terminals may be configured to communicate with the information processing system 230 over the network 220.

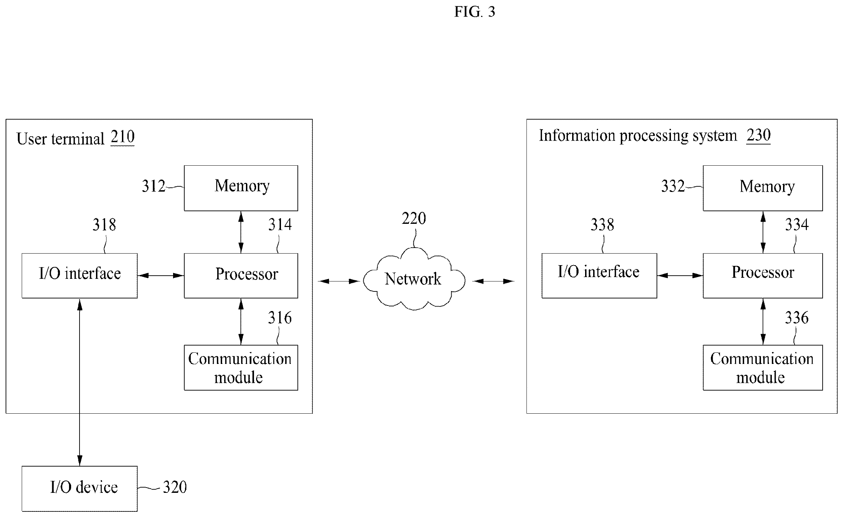

FIG. 3 is a block diagram illustrating an internal configuration of a user terminal 210 and the information processing system 230 according to an example embodiment of the present disclosure. The user terminal 210 may refer to any computing device that may execute an in-image text detection application and may perform wired/wireless communication and, for example, may include the portable phone terminal 210_1, the tablet terminal 210_2, and the PC terminal 210_3 of FIG. 2. As illustrated, the user terminal 210 may include a memory 312, a processor 314, a communication module 316, and an input/output (I/O) interface 318. Similar thereto, the information processing system 230 may include a memory 332, a processor 334, a communication module 336, and an I/O interface 338. As illustrated in FIG. 3, the user terminal 210 and the information processing system 230 may be configured to communicate information and/or data through the network 220 using the respective communication modules 316 and 336. Also, an I/O device 320 may be configured to input information and/or data to the user terminal 210 or to output information and/or data generated from the user terminal 210 through the I/O interface 318.

The memory 312, 332 may include non-transitory any computer-readable recording medium. According to an example embodiment, the memory 312, 332 may include a permanent mass storage device, such as ROM, disk drive, solid state drive (SSD), and flash memory. As another example, the permanent mass storage device, such as ROM, SSD, flash memory, and disk drive, may be included in the user terminal 210 or the information processing system 230 as a separate permanent storage device distinguished from the memory. Also, an operating system (OS) and at least one program code (e.g., code for application associated with in-image text detection service) may be stored in the memory 312, 332.

Such software components may be loaded from another computer-readable recording media separate from the memory 312, 332. Such separate computer-readable recording media may include recording media directly connectable to the user terminal 210 and the information processing system 230, and may include, for example, a floppy drive, a disk, a tape, a DVD/CD-ROM drive, a memory card, and the like. As another example, the software components may be loaded to the memory 312, 332 through the communication module 316, 336, rather than the computer-readable recording media. For example, at least one program may be loaded to the memory 312, 332 based on a computer program (e.g., application associated with in-image text detection service) installed by files provided from developers or a file distribution system distributing an installation file of an application through the network 220.

The processor 314, 334 may be configured to process instructions of the computer program by performing basic arithmetic, logical, and I/O operations. The instructions may be provided to the processor 314, 334 by the memory 312, 332 or the communication module 316, 336. For example, the processor 314, 334 may be configured to execute an instruction received according to a program code stored in a storage device such as the memory 312, 332.

The communication module 316, 336 may provide a configuration or a function for the user terminal 210 and the information processing system 230 to communicate with each other over the network 220, and may provide a configuration or a function for the user terminal 210 and/or the information processing system 230 to communicate with another user terminal or another system (e.g., separate cloud system). For example, a request or data (e.g., text detection request) generated by the processor 314 of the user terminal 210 according to a program code stored in a recording device, such as the memory 312, may be transmitted to the information processing system 230 over the network 220 under control of the communication module 316. Inversely, a control signal or an instruction provided under control of the processor 334 of the information processing system 230 may be received by the user terminal 210 through the communication module 316 of the user terminal 210 by passing through the communication module 336 and the network 220.

The I/O interface 318 may be a method for interfacing with the I/O device 320. For example, an input device may include a device, such as a camera including an audio sensor and/or an image sensor, a keyboard, a microphone, and a mouse, and an output device may include a device, such as a display, a speaker, and a haptic feedback device. As another example, the I/O interface 318 may be a method for interfacing with a device in which configurations or functions for performing input and output are integrated, such as a touchscreen. In FIG. 3, the I/O device 320 is illustrated as not being included in the user terminal 210, but is not limited thereto and may be configured as a single device with the user terminal 210. Also, the I/O interface 338 of the information processing system 230 may be a method for interfacing with a device (not shown) for input or output that may be connected to the information processing system 230 or included in the information processing system 230. In FIG. 3, the I/O interface 318, 338 is illustrated as a component separate from the processor 314, 334, but is not limited thereto, and the I/O interface 318, 338 may be configured to be included in the processor 314, 334.

The user terminal 210 and the information processing system 230 may include the greater number of components than the components of FIG. 3. However, there is no need to clearly illustrate most conventional components. In an example embodiment, the user terminal 210 may be implemented to include at least a portion of the aforementioned I/O device 320. Also, the user terminal 210 may further include other components, such as a transceiver, a global positioning system (GPS) module, a camera, various sensors, and a database. For example, when the user terminal 210 is a smartphone, the user terminal 100 may include components that the smartphone generally includes, and for example, various components, such as an acceleration sensor, a gyro sensor, a microphone module, a camera module, various physical buttons, a button using a touch panel, an I/O port, and a vibrator for vibration, may be implemented to be further included in the user terminal 210.

According to an example embodiment, the processor 314 of the user terminal 210 may be configured to operate an in-image text detection application or a web browser application that provides an in-image text detection service. Here, a program code associated with the corresponding application may be loaded to the memory 312 of the user terminal 210. While the application is running, the processor 314 of the user terminal 210 may receive information and/or data provided from the I/O device 320 through the I/O interface 318, or may receive information and/or data from the information processing system 230 through the communication module 316 and may process the received information and/or data and store the same in the memory 312. Also, such information and/or data may be provided to the information processing system 230 through the communication module 316.

While the in-image text detection application is running, the processor 314 may receive voice data, text, image, and video input or selected through the input device, such as a touchscreen, a keyboard, a camera including an audio sensor and/or an image sensor, and a microphone connected to the I/O interface 318, may store the received voice data, text, image, and/or video in the memory 312, or may provide the same to the information processing system 230 through the communication module 316 and the network 220. In an example embodiment, the processor 314 may receive a user input for selecting a graphical object displayed on a display, which is input through the input device, and may provide data/request corresponding to the received user input to the information processing system 230 through the network 220 and the communication module 316.

The processor 314 of the user terminal 210 may transmit information and/or data to the I/O device 320 through the I/O interface 318 and thereby output the same. For example, the processor 314 of the user terminal 210 may output information and/or data through the output device 320, such as a display output-enabled device (e.g., touchscreen, display, etc.) and a voice output-enabled device (e.g., speaker).

The processor 334 of the information processing system 230 may be configured to manage, process, and/or store information and/or data received from a plurality of user terminals 210 and/or a plurality of external systems. The information and/or data processed by the processor 334 may be provided to the user terminal 210 through the communication module 336 and the network 220.

FIG. 4 is a block diagram illustrating an internal configuration of a text detection model 430 and input/output data according to an example embodiment of the present disclosure. FIG. 4 illustrates an example of a configuration of the text detection model 430 executed by an information processing system or a user terminal. The text detection model 430 may correspond to a transformer model that includes an encoder 432 and a decoder 434, or a modified model thereof. For example, the text detection model 430 may correspond to a multi-way transformer model.

An image 410 including text, received from a user, may be input to the encoder 432. In an example embodiment, the encoder 432 may extract a feature of the image from the image 410. Then, the feature of the image extracted by the encoder 432 may be input to the decoder 434.

A text detection condition 420 received or preset from the user may be input to the decoder 434. When the text detection condition 420 is not configured in a form of an instruction that may be input to the decoder 434 (e.g., natural language), a process of converting the text detection condition 420 to an instruction format may be separately executed before being input to the decoder 434.

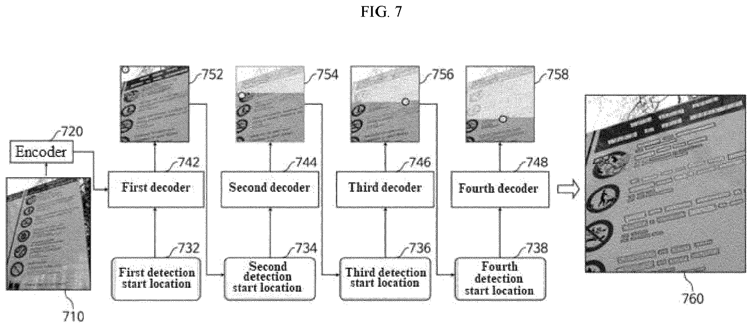

The decoder 434 may generate a sequence 440 associated with a text instance included in the image 410 from the feature of the image and the text detection condition 420. In an example embodiment, the sequence 440 may include at least one sequence. For example, the sequence 440 may include a start sequence (first sequence) indicating the detection result of the predetermined number of text instances from a text detection start location, and at least one intermediate or end sequence (second sequence) indicating the detection result of the predetermined number of text instances from a location of the last detection result of the start location sequence. Through this configuration, all text instances included in the image may be detected without limiting the length of text instances or an information amount that may be detected. Here, each of at least one sequence may be generated by an auto-regressive decoder. This is further described with reference to FIG. 7.

In an example embodiment, the sequence 440 may indicate at least one of a location or the content of each text instance within the image 410. In detail, the sequence 440 may include a plurality of tokens indicating the detection result of the text instance or start and end of the detection result. That is, each of the plurality of tokens included in the sequence 440 may represent a location or the content of each text instance corresponding thereto within the image 410. Further description related thereto is made with reference to FIG. 5.

FIG. 5 illustrates an example of a sequence 500 generated from a text detection model according to an example embodiment of the present disclosure. The sequence 500 may indicate at least one of a location or the content of a text instance within an image. In detail, the sequence 500 may include a start location sequence 510 associated with a text detection start location, a start token 520 indicating start of the detection result, a detection result sequence 530 indicating the detection result of text instances, and an end token 540 indicating end of the detection result.

The detection result sequence 530 may indicate the detection result of the predetermined number of text instances from the text detection start location. As the length of the sequence 500 is limited, the detection result sequence 530 may include sequence 531, 532, 533, 534, 535 associated with each of the predetermined number of (e.g., 20) text instances. Each of the sequences 531, 532, 533, 534, and 535 may indicate the detection result of at least one text instance in a predetermined direction (e.g., left-to-right and top-to-bottom) from the text detection start location within the image.

In detail, the sequence 531 associated with a first text instance may include a detection type token 531_1, a coordinate sequence 531_2 associated with a detection type, a content sequence 531_3 associated with the content of the text instance, and a padding sequence 531_4. Without being limited thereto, the sequence 531 may further include a token or a sequence associated with another text detection condition.

The detection type token 531_1 may represent a detection type of the text instance. The detection type token 531_1 may be determined based on a detection condition input from the user. For example, when the text instance detection type input from the user includes a center point, a bounding box, a rectangle, and a polygon, the detection type token 531_1 may be represented as '<point>', '<bbox>', '<quad>', and '<poly>,' respectively.

In an example embodiment, the length of the image coordinate sequence 531_2 may be determined based on the type of the detection type token 531_1. For example, when the detection type token 531_1 includes '<point>', '<bbox>', '<quad>', and '<poly>', the image coordinate sequence 531_2 may be configured with a plurality of tokens that include 1, 2, 4, and 16 pieces of coordinate information, respectively. Here, coordinate information included in the image coordinate sequence 531_2 may correspond to coordinate information normalized based on the size of each image.

The content sequence 531_3 may represent the content of the text instance. In an example embodiment, the content sequence 531_3 may be generated later than the coordinate sequence 531_2. In this case, the coordinate sequence 531_2 indicating the coordinate detection result and the content sequence 531_3 indicating the content detection result may be distinguished by separate time stamps.

In an example embodiment, the content sequence 531_3 may include at least one token including each character included in the text instance. Then, the content of the text instance may be determined by concatenating the tokens included in the content sequence 531_3.

The padding sequence 531_4 is added to the next of the content sequence 531_3, such that the sum of tokens included in the content sequence 531_3 and the padding sequence 531_4 may be maintained constant. For example, if the sum of tokens included in the content sequence 531_3 and the padding sequence 531_4 is predetermined to be 25 and the number of tokens of the content sequence 531_3 is 6, the padding sequence 531_4 may be composed of 19 '<pad>' tokens. Unlike this, if the number of characters included in the text instance exceeds 25, the number of tokens corresponding to the exceeding characters may be omitted such that the number of tokens included in the content sequence 531_3 becomes 25. Here, the padding sequence 531_4 may not be included in the sequence 531.

The aforementioned description related to the configuration of the sequence 531 associated with the first detected text instance may be equally applied to other sequences 532, 533, 534, and 535.

The end token 540 may be inserted in response to all text instances being detected in the image. For example, if the predetermined number of or less text instances up to a lower rightmost end of the image are detected, the end token 540 may be inserted at the end of the sequence 500.

Unlike this, if the predetermined number of text instances are detected before all text instances up to the lower rightmost end of the image are detected, the end token 540 may not be inserted. In this case, a location of a last detected text instance may be updated with a detection start location, and the predetermined number of other text instances may be detected in left-to-right and top-to-bottom directions from the updated detection start location. This process may be repeated until all the text instances within the image are detected. The end token 540 may be inserted after all iterations are completed, and the sequence 500 may further include at least one start location sequence, a start token, and a detection result sequence corresponding to each iteration before the end token 540 is inserted.

Additionally, each text instance may be translated to a specific language based on the sequence 500 and then displayed on the image by replacing the existing text instance. Alternatively, summary information of the image or the text instance (e.g., information indicating that the image is estimated to be an image captured from a signboard of lodging establishment), or the text instance may be provided as voice output.

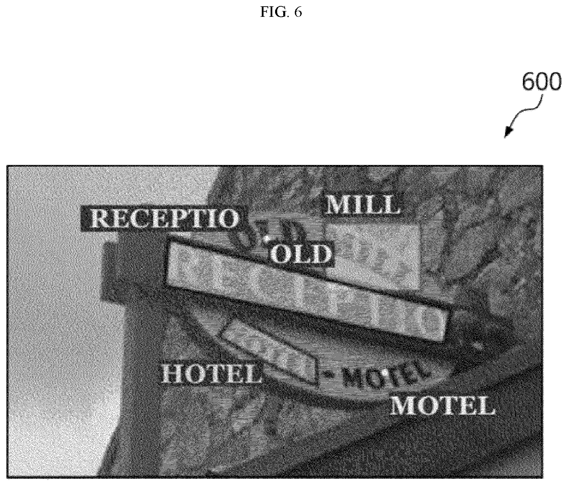

FIG. 6 illustrates an image 600 in which the detection result of a text instance is visualized based on a sequence generated according to an example embodiment of the present disclosure. FIG. 6 illustrates that a corresponding location and content are displayed on the image based on location and content information within the image of each text instance included in the sequence example described above with reference to FIG. 5. Here, a location of each text instance within the image may be displayed on the image as a corresponding detection type based on each detection type token of FIG. 5.

For example, a location of'OLD' text instance detected according to '<point>' detection type token of FIG. 5 may be displayed as a location of a center point of the 'OLD' text instance on the image. As another example, a location of 'MILL' text instance detected according to '<bbox>'detection type token may be displayed in a box form on the image. As illustrated in FIG. 6, a corresponding text instance may be displayed together near a detected text instance location. Here, each detection type displayed on the image may be specified based on the predetermined number of coordinate types on the image for the detection type.

FIG. 7 illustrates a process of sequentially detecting a plurality of text instances according to an example embodiment of the present disclosure. For clarity of description, first to fourth decoders 742, 744, 746, and 748 are illustrated as separate entities in FIG. 7, but may be configured as a single decoder.

After an input image 710 is input to an encoder 720, a feature of the input image extracted by the encoder 720 may be input to the first decoder 742. Here, a first detection start location 732 (e.g., x=0, y=0) may be input to the first decoder 742 together. The first detection start location 732 may be received from a user terminal, or may correspond to an upper leftmost point of the input image 710.

The first decoder 742 may generate a first sequence associated with a text instance included in the input image based on a feature of the input image and the first detection start location 732. The first sequence may indicate the detection result of the predetermined number of text instances in a predetermined direction (e.g., left-to-right and top-to-bottom directions) from a text detection start location within the image. Additionally, a first output image 752 in which the detection result of a text instance is visualized on the image may be generated based on the first sequence.

Then, the detection start location may be updated with a second detection start location 734 (e.g., x=0, y=325) that is a location of the last detection result of the first sequence. The second decoder 744 may generate a second sequence indicating the detection result of the predetermined number of text instances in left-to-right and top-to-bottom directions from the second detection start location 734. Additionally, a second output image 754 in which the detection result included in the second sequence is visualized on the image may be generated based on the second sequence.

Likewise, this process may be repeated until all the text instances within the input image 710 are detected. For example, the third decoder 746 may generate a third sequence indicating the detection result of the predetermined number of text instances in left-to-right and top-to-bottom directions from the third detection start location 736 (e.g., x=750, y=450) that is a location of the last detection result of the second sequence, and the fourth decoder 748 may generate a fourth sequence indicating the detection result of the predetermined number of text instance in left-to-right and top-to-bottom directions from the fourth detection start location 738 (e.g., x=500, y=675) that is a location of the last detection result of the third sequence. Additionally, a third output image 756 and a fourth output image 758 may be generated in which the detection result included in the third sequence and the detection result included in the fourth sequence are visualized on the images, respectively.

In response to all text instances within the input image 710 being detected, a sequence including the detection result of the entire text instances may be generated. For example, based on the first sequence to the fourth sequence, a sequence including the detection result of the entire text instances may be generated. Then, an output image 760 may be generated in which the detection result of the entire text instances is visualized on the input image 710.

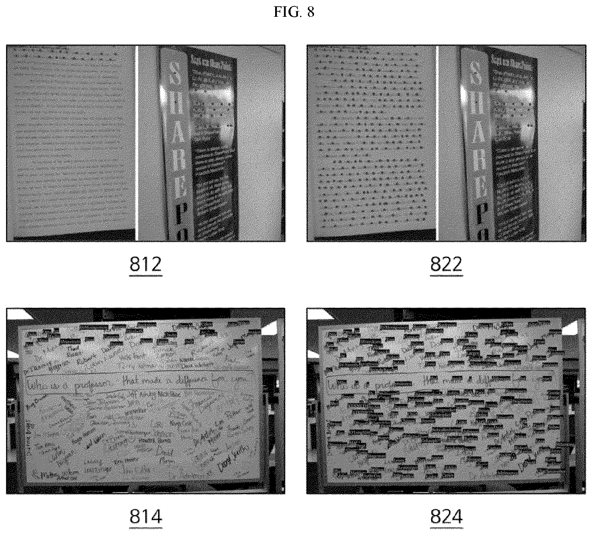

FIG. 8 illustrates the text detection result according to an example embodiment of the present disclosure and the text detection result according to the existing technology.

In the text detection results 812 and 814 according to the existing sequence generation-based OCR technology, only some text instances of the entire text may be displayed due to the length limitation of output data by the existing text detection model. In contrast, in the text detection results 822 and 824 according to an example embodiment of the present disclosure for the same image, it may be confirmed that all text instances included in the image are detected and displayed according to the method described with reference to FIG. 7.

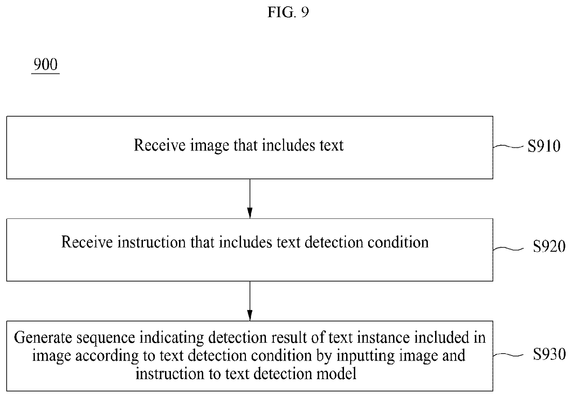

FIG. 9 is a flowchart illustrating a method 900 of detecting text in an image according to an example embodiment of the present disclosure. The method 900 may be performed by at least one process of an information processing system or a user terminal. The method 900 may be initiated by the processor receiving an image that includes text (S910).

Then, the processor may receive an instruction that includes a text detection condition (S920). In an example embodiment, the text detection condition may include information associated with a detection type of the text instance. For example, the detection type may include at least one of a center point of the text instance, a bounding box of the text instance, and a polygon including the text instance, and may be displayed in the form of the predetermined number of coordinates for the detection type.

In an example embodiment, the text detection condition may include at least one of a detection start location and a detection area of the text instance within the image.

In an example embodiment, the text detection condition may include a detection language of the text instance.

Then, the processor may generate a sequence indicating the detection result of a text instance included in the image according to the text detection condition by inputting the image and the instruction to a text detection model (S930). Here, the text detection model may correspond to a transformer model that includes an encoder and a decoder. In detail, the text detection model may extract a feature of the image from the image using the encoder, and may generate a sequence associated with the text instance included in the image from the feature of the image and the instruction using the decoder. The sequence generated by the processor may indicate at least one of a location and the content of the text instance within the image, and may include a plurality of tokens indicating the detection result of the text instance or start and end of the detection result.

In an example embodiment, the sequence generated by the processor may include at least one sequence indicating the detection result of the at least one text instance in a predetermined direction from a text detection start location within the image. Here, the at least one sequence may include a first sequence indicating the detection result of the predetermined number of text instances from a text detection start location and a second sequence indicating the detection result of the predetermined number of text instances from a location of the last detection result of the first sequence.

In an example embodiment, when the text detection condition includes the detection language of the text instance, the processor may generate the sequence indicating the detection result of the text instance composed of the detection language by inputting the image and the instruction to the text detection model.

Then, the processor may visualize the detection result of the text instance on the image based on the sequence. For example, the processor may display a location and the content of each text instance on the image.

The flowchart illustrated in FIG. 9 and the description above are only an example and may be differently implemented in some example embodiments. For example, at least one operation may be omitted, the order of each operation may be changed, at least one operation may be overlappingly performed, or at least one operation may be iteratively performed multiple times.

The aforementioned methods may be provided in a computer program stored in computer-readable media to be executed on a computer. Here, the media may be to continuously store a computer-executable program or to temporarily store the same for execution or download. Also, the media may be various types of recording methods or storage methods in which single hardware or a plurality of hardware is combined and may be distributed over a network without being limited to a medium that is directly connected to a computer system. Examples of the media include magnetic media such as hard disks, floppy disks, and magnetic tapes; optical media such as CD ROM and DVD; magneto-optical media such as floptical disks; and hardware devices that are specially configured to store and perform program instructions, such as ROM, RAM, flash memory, and the like. Also, examples of other media may include recording media and storage media managed by an app store that distributes applications or a site, a server, and the like that supplies and distributes other various types of software.

The methods, operations, or techniques of the present disclosure may be implemented in various manners. For example, the techniques may be implemented by hardware, firmware, software, or combinations thereof. Those skilled in the art may understand that various exemplary logical blocks, modules, circuitries, and algorithm operations described in association with the disclosure herein may be implemented using electronic hardware, computer software, or combinations thereof. To clearly describe this interchange between hardware and software, various exemplary components, blocks, modules, circuitries, and operations are described above in terms of functions thereof. Whether such functions are implemented as hardware or implemented as software depends on design requirements imposed to the overall system and a specific application. Those skilled in the art may implement the aforementioned functions in various manners for each specific application, but such implementations should not be interpreted as deviating from the scope of the present disclosure.

In hardware implementation, processing units used to perform the techniques may be implemented using one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described herein, computer, or combinations thereof.

Therefore, various exemplary logic blocks, modules, and circuitries described in association with the present disclosure may be implemented or performed in any combination with a general-purpose processor, a DSP, an ASIC, an FPGA, or other programable logic devices, a discrete gate or transistor logic, discrete hardware components, or devices designed to perform functions described herein. The general-purpose processor may be a microprocessor and, alternatively, the processor may be a conventional processor, a controller, a microcontroller, or a state machine. The processor may be implemented using a combination of computing devices, for example, a combination of a DSP and a microprocessor, a combination of a plurality of microprocessors, and a combination of one or more microprocessors associated with a DSP core, or a combination of other components.

In firmware and/or software implementation, the techniques may be implemented as instructions stored in computer-readable recording media, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), and a magnetic or optical data storage device. The instructions may be executable by one or more processors and may cause the processor(s) to perform specific aspects of the functions described herein.

Although the example embodiments are described as using aspects of the currently disclosed subject matter in one or more stand-alone computer systems, the present disclosure is not limited thereto and may be implemented in conjunction with an arbitrary computing environment, such as network or distributed computing environment. Also, aspects of the subject matter in the present disclosure may be implemented in a plurality of processing chips or devices, and storage may be similarly affected across the plurality of devices. The devices may include PCs, network servers, and portable devices.

Although the present disclosure is described with reference to some example embodiments, various modifications and changes may be made without departing from the scope of the present disclosure that may be understood by those skilled in the art. Also, such modifications and changes should be understood to fall within the scope of the claims.

## Claims

1. A method of detecting text in an image, performed by at least one processor, the method comprising:
receiving an image that includes text;
receiving an instruction that includes a text detection condition; and
generating a sequence indicating a detection result of a text instance included in the image according to the text detection condition by inputting the image and the instruction to a text detection model.

2. The method of claim 1, wherein the text detection model is a transformer model that includes an encoder and a decoder.

3. The method of claim 2, wherein the generating of the sequence comprises:
extracting, by the encoder, a feature of the image from the image; and
generating, by the decoder, a sequence associated with the text instance included in the image from the feature of the image and the instruction.

4. The method of claim 1, wherein the text detection condition includes information associated with a detection type of the text instance.

5. The method of claim 4, wherein the detection type includes at least one of a center point of the text instance, a bounding box of the text instance, and a polygon including the text instance.

6. The method of claim 4, wherein the detection type is displayed in the form of the predetermined number of coordinates for the detection type.

7. The method of claim 1, wherein the text detection condition includes at least one of a detection start location and a detection area of the text instance within the image.

8. The method of claim 1, wherein the sequence includes at least one sequence indicating the detection result of at least one text instance in a predetermined direction from a text detection start location within the image.

9. The method of claim 8, wherein the at least one sequence includes:
a start location sequence indicating the detection result of the predetermined number of text instances from the text detection start location; and
a detection result sequence indicating the detection result of the predetermined number of text instances from a location of the last detection result of the start location sequence.

10. The method of claim 1, wherein the text detection condition includes a detection language of the text instance, and
the generating of the sequence comprises generating a sequence indicating the detection result of a text instance configured with the detection language by inputting the image and the instruction to the text detection model.

11. The method of claim 1, wherein the sequence indicates a location or the content of the text instance within the image.

12. The method of claim 1, wherein the sequence includes a plurality of tokens indicating the detection result of the text instance or start and end of the detection result.

13. The method of claim 1, further comprising:
visualizing the detection result of the text instance on the image based on the sequence.

14. A non-transitory computer-readable recording medium storing instruction to execute the method of claim 1 on a computer.

15. An information processing system comprising:
a communication module;
a memory; and
at least one processor configured to connect to the memory, and to execute at least one computer-readable program included in the memory,
wherein the communication module is configured to receive an image that includes text, and to receive an instruction that includes a text detection condition, and
the at least one program includes instructions for generating a sequence indicating a detection result of a text instance included in the image according to the text detection condition by inputting the image and the instruction to a text detection model.
